# EUROPÄISCHE PATENTSCHRIFT

(11) **EP 2 574 510 B1**
(45) Veröffentlichungstag und Bekanntmachung des Hinweises auf die Patenterteilung: **15.08.2018**
(21) Anmeldenummer: 12006580.0
(22) Anmeldetag: 19.09.2012
(51) Int. Cl.: B60T 7/10, G05G 1/06

(54) **Handbremshebel für Kraftfahrzeuge**
Handbrake lever for motor vehicles
Levier de frein à main pour véhicules automobiles

(30) Priorität: 30.09.2011 DE 102011114592
(43) Veröffentlichungstag der Anmeldung: 03.04.2013
(73) Patentinhaber: Volkswagen Aktiengesellschaft, 38440 Wolfsburg (DE)
(72) Erfinder: Burmester, Steffen, 38448 Wolfsburg-Warmenau (DE); Krauss, Andreas, 38551 Ribbesbüttel (DE)

(56) Entgegenhaltungen:
- GB-A- 1 118 431
- US-A- 5 159 850
- US-A1- 2010 242 666

## Beschreibung

Die Erfindung betrifft einen Handbremshebel für Kraftfahrzeuge mit einem Griffteil, einer mit dem Griffteil verbundenen, hülsenförmigen Verkleidung und einer sich in Längsrichtung des Griffteils erstreckenden und gegen die Kraft einer Druckfeder axial verschiebbaren Druckstange mit endseitig angeordnetem Betätigungsknopf, wobei die Verkleidung ein radial ausgerichtetes und sich in Richtung der Druckstange erstreckendes Abstützelement aufweist.

Ein derartiger Handbremshebel als Betätigungsvorrichtung für eine Feststellbremse, wie sie in Kraftfahrzeugen Verwendung findet, ist bereits aus der DE 10 2007 053 461 A1 bekannt. Der Handbremshebel ist schwenkbeweglich in einem mit der Kraftfahrzeugkarosserie fest verbundenen Lagerbock gelagert. Der Handbremshebel setzt sich aus einem vorderen Hebelabschnitt in Form eines Griffteils, einem mittleren Hebelabschnitt zur Aufnahme einer Arretiereinrichtung und einem hinteren Hebelabschnitt mit einer Zugmittelaufnahme für ein Zugmittel, beispielsweise ein Gestänge und/oder einen Seilzug, zusammen. Der Handbremshebel ist aus Metallguss, vorzugsweise Leichtmetall nach einem bekannten Druckgussverfahren hergestellt.

Das Griffteil ist als geschlossenes Hohlprofil ausgebildet. Innerhalb des Hohlprofils ist die Druckstange, welche endseitig einen Betätigungsknopf aufweist, entgegen der Kraft einer Druckfeder längsbeweglich gelagert. Für die Abstützung der Feder sind Buchsen vorgesehen. Weiterhin ist das Griffteil außenseitig von einer hülsenförmigen Verkleidung umschlossen und fest mit dieser verbunden. Zur Aufnahme des Betätigungsknopfs weist die Verkleidung im vorderen Bereich eine Öffnung auf.

Zur radialen Abstützung des Betätigungsknopfs an der Verkleidung weist die Verkleidung oder der Betätigungsknopf radial ausgerichtete und sich in Richtung der Druckstange erstreckende Abstützelemente auf. Die Abstützelemente sind als punktförmig ausgebildete Fortsätze ausgebildet und zwischen einer äußeren Oberfläche des Betätigungsknopfs und einer dieser äußeren Oberfläche zugewandten inneren Oberfläche der Verkleidung angeordnet.

Eine derartige Ausgestaltung des Handbremshebels erfordert einen erhöhten Montageaufwand, welcher insbesondere durch die zusätzlichen Bauteile in Form der Buchsen zur Abstützung der Druckfeder im geschlossenen Hohlprofil des Griffteils verursacht wird.

Die DE 20 2009 013 243 U1, die EP 1 818 229 A1 und die EP 1 818 230 A1 beschreiben ebenfalls Handbremseinrichtungen für Kraftfahrzeuge mit entgegen der Kraft einer Feder längsverschiebbaren Druckstangen. Ferner sind aus den US 2010/0242666 A1,
US 5,159,850 A und GB 1,118,431 A unterschiedliche Handbremseinrichtungen für Kraftfahrzeuge bekannt, bei welchen eine Feder gegen einen Gehäuseabschnitt der Handbremseinrichtung abgestützt ist.

Vor diesem Hintergrund liegt der Erfindung die Aufgabe zugrunde, einen verbesserten Handbremshebel zur Verfügung zu stellen, welcher auch einen geringeren Montageaufwand erfordert.

Diese Aufgabe wird gelöst mit einem Handbremshebel gemäß den Merkmalen des Patentanspruchs 1. Die Unteransprüche betreffen besonders zweckmäßige Weiterbildungen der Erfindung.

Erfindungsgemäß ist also ein Handbremshebel für Kraftfahrzeuge vorgesehen, bei welchem das Abstützelement in Längsrichtung zwischen dem Betätigungsknopf und dem Griffteil angeordnet ist und sich ein dem Betätigungsknopf abgewandter Endabschnitt der Druckfeder an dem Abstützelement abstützt. Aus einer derartigen Ausgestaltung des Handbremshebels resultiert ein geringerer Montageaufwand, da zusätzliche Bauteile in Form von Buchsen zur Abstützung der Druckfeder nicht erforderlich sind. Das Widerlager für die Druckfeder ist in der Verkleidung integriert. Die Lagerung der Druckfeder erfolgt also zwischen der Verkleidung und dem Betätigungsknopf. Zusätzlich zu montierende Bauteile für die Abstützung der Druckfeder sind nicht erforderlich. Im Vergleich zum eingangs genannten Stand der Technik weist der Handbremshebel außerdem eine geringere Länge auf, um Platz für die Anordnung der Druckfeder im vorderen Bereich des Handbremshebels zu schaffen. Auf eine Fettung der Druckfeder, wie sie in herkömmlichen Handbremshebeln erforderlich ist, kann verzichtet werden, da die Druckfeder durch den kurzen Bauraum stabiler ausgeführt ist und einen größeren Abstand zur Druckstange aufweist.

Der Montage- und Herstellungsaufwand wird auch dadurch reduziert, dass die Verkleidung und das Abstützelement einstückig ausgebildet sind. Die Verkleidung und das Abstützelement bestehen vorwiegend aus Kunststoff und können beispielsweise im Spritzgussverfahren hergestellt werden. Als Material für die Verkleidung kommen insbesondere thermoplastische Kunststoffe, wie beispielsweise Acrylnitril-Butadien-Styrol (ABS), Polyvinylchlorid (PVC), Polypropylen (PP) oder Polyamid (PA) in Betracht. Auch zweikomponentige Ausgestaltungen sind möglich, wobei in einem äußeren Bereich aus haptischen und/oder optischen Gründen thermoplastische Elastomere (TPE) oder ein synthetischer Kautschuk (EPDM) vorgesehen ist. Selbstverständlich kann auf einer äußeren Oberfläche der Verkleidung, je nach Ausstattungsvariante des Kraftfahrzeugs, auch eine zusätzliche Oberflächenschicht, beispielsweise aus Leder, oder eine zusätzliche Beschichtung aus einem geeigneten Material aufgebracht werden.

Dabei erweist es sich als besonders vorteilhaft, dass sich das Abstützelement über den gesamten Umfang der Verkleidung erstreckt. Durch die ringförmige und umlaufende Ausgestaltung des Abstützelements wird ein stabiles Widerlager für die insbesondere als Schraubenfeder ausgebildete Druckfeder zur Verfügung gestellt, wobei die äußere Windung der Druckfeder vollumfänglich an dem Abstützelement anliegt.

Eine alternative Ausführungsform der vorliegenden Erfindung wird auch dadurch erreicht, dass die Verkleidung zwei oder mehrere über den Umfang verteilte Abstützelemente aufweist, welche in einer gemeinsamen, quer zur Längsrichtung des Griffteils ausgerichteten Ebene angeordnet sind. In vorteilhafter Weise sind die Abstützelemente dann gleichmäßig über den Umfang der Verkleidung angeordnet.

Erfindungsgemäß ist weiter vorgesehen, dass die Verkleidung und das Griffteil unlösbar miteinander verbunden sind. Hierdurch wird eine Relativbewegung zwischen dem Griffteil und der Verkleidung verhindert und gewährleistet, dass sich das Abstützelement in einem definierten Abstand zur Druckstange bzw. zum Betätigungsknopf befindet, sodass die Feder funktions- und prozesssicher zwischen dem Betätigungsknopf und dem Abstützelement angeordnet werden und sich abstützen kann. Die Verbindung zwischen Verkleidung und Griffteil kann durch Stoffschluss, durch Kraftschluss oder durch Formschluss erfolgen, wobei sich eine Presspassung zwischen der Verkleidung und dem Griffteil insbesondere hinsichtlich des Montageaufwands als besonders vorteilhaft erwiesen hat.

Außerdem erweist es sich als besonders zweckmäßig, dass der Betätigungsknopf lösbar mit der Druckstange verbunden ist. Hierdurch ergibt sich eine weitere Vereinfachung der Montage, da der Betätigungsknopf, nachdem die Druckfeder auf der Druckstange angeordnet wurde und in der Verkleidung an dem Abstützelement zur Anlage gekommen ist, endseitig auf die Druckstange aufgesteckt wird. Der Betätigungsknopf ist in dem vorderen Abschnitt der Verkleidung in dieser gelagert und dient auch als Widerlager für die Druckfeder.

Vor der Montage der Verkleidung auf dem Griffteil wird zunächst die Druckstange in dem Handbremshebel bzw. in dem Griffteil angeordnet. Anschließend wird die Verkleidung je nach verwendetem Material auf eine Temperatur von ca. 60-80 °C erwärmt, um die Montagekräfte beim Aufschieben der hülsenförmig ausgebildeten Verkleidung auf das Griffteil zu reduzieren. Durch die Erwärmung der Verkleidung wird die Gefahr, dass bei dem Aufschieben sichtbare Verformungen in der Verkleidung entstehen, minimiert. Bei einer fertig montierten Verkleidung steht die Druckstange ein Stück aus der Verkleidung heraus. Dieser Überstand wird während des Aufschiebens der Verkleidung auf das Griffteil durch ein seitlich angeordnetes Messsystem erfasst und mit einem Sollwert verglichen. Das Aufschieben der Verkleidung wird so lange fortgesetzt, bis der Überstand dem Sollwert entspricht. Durch eine derartige Montage können Bauteiltoleranzen der Druckstange, der Verkleidung und des Griffteils kompensiert werden. Anschließend wird die Druckfeder über die Druckstange geschoben, bis die Druckfeder an dem Abstützelement der Verkleidung zur Anlage kommt. Dann wird der Betätigungsknopf auf dem freien Ende der Druckstange angeordnet, sodass sich die Druckfeder zwischen dem Abstützelement und dem Betätigungsknopf abstützt.

Ein weiteres erfindungsgemäßes Merkmal besteht darin, dass die Verkleidung ein Dämpfungselement aufweist, an welchem sich eine der Druckfeder zugewandte Fläche des Betätigungsknopfs in einer eingerückten Endlage abstützt. Hierdurch kann die Geräuschentwicklung beim Entriegeln der Handbremse reduziert werden, da das Dämpfungselement einen unmittelbaren Kontakt des Betätigungsknopfs mit der Verkleidung, durch welchen das Geräusch erzeugt wird, verhindert.

In diesem Fall erweist es sich als vorteilhaft, dass das Dämpfungselement aus einem elastisch verformbaren Material, insbesondere einem Schaumstoff, besteht und an der Verkleidung oder dem Abstützelement fixiert ist. Das Dämpfungselement kann aus einem weichen synthetischen Kautschuk (z. B. EPDM) bestehen und durch Stoffschluss, beispielsweise durch Kleben, oder durch Formschluss, beispielsweise durch Verrasten, oder durch Kraftschluss an der Verkleidung oder dem Abstützelement fixiert werden. Als besonders zweckmäßig hat es sich erwiesen, dass das Dämpfungselement in eine in der Verkleidung oder im Abstützelement integrierte, als Mulde ausgebildete Ausnehmung gepresst wird. Die Fixierung des Dämpfungselements erfolgt dann, bevor der Betätigungsknopf abschließend auf der Druckstange verrastet wird.

Alternativ können das Dämpfungselement und die Verkleidung auch einstückig ausgebildet sein. Hierbei wird das Dämpfungselement im Rahmen des Herstellungsprozesses der Verkleidung an diese angespritzt.

Da das Dämpfungselement in der einstückigen Ausgestaltung aus dem gleichen Material wie die Verkleidung besteht, ist vorgesehen, dass das Dämpfungselement mehrere Rillen und/oder Lamellen aufweist. Durch die Rillen- und/oder Lamellenkontur kann eine ausreichende Geräuschreduzierung gewährleistet werden. Hierbei können zwischen 4 und 12 Rillen bzw. Lamellen gleichmäßig verteilt auf der Fläche des Dämpfungselements angeordnet werden. Insbesondere bei Packageproblemen können die Lamellen bzw. Rillen jedoch auch unstetig verteilt auf der Fläche des Dämpfungselements angeordnet werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Explosionsdarstellung einer Betätigungsvorrichtung für eine Feststellbremse nach dem Stand der Technik;
- Fig. 2: einen erfindungsgemäß ausgebildeten Handbremshebel in einer teilweise geschnittenen Seitenansicht;
- Fig. 3: den vorderen Bereich des in Figur 2 dargestellten Handbremshebels in einer vergrößerten Darstellung;
- Fig. 4: den in Figur 3 dargestellten Handbremshebel in einer perspektivischen Ansicht;
- Fig. 5: eine zweite Ausführungsform des erfindungsgemäßen Handbremshebels in einer teilweise geschnittenen Seitenansicht;
- Fig. 6: eine Ansicht gemäß Pfeil I aus Figur 3 ohne Betätigungsknopf und ohne Dämpfungselement;

- Fig. 7: eine Ansicht gemäß Pfeil I aus Figur 3 ohne Betätigungsknopf und mit Dämpfungselement;
- Fig. 8: eine dritte Ausführungsform des erfindungsgemäßen Handbremshebels in einer teilweise geschnittenen Seitenansicht;
- Fig. 9-11: Einzelheit II aus Figur 8 in verschiedenen Ausführungsvarianten.

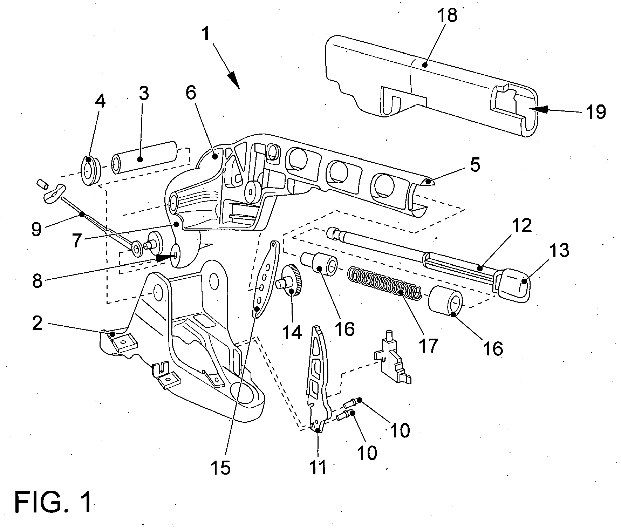

Figur 1 zeigt eine herkömmliche Betätigungsvorrichtung für eine Feststellbremse, wie sie in Kraftfahrzeugen Verwendung findet. Im Wesentlichen umfasst die besagte Betätigungsvorrichtung einen Handbremshebel 1, der seinerseits in einem mit der Kraftfahrzeugkarosserie fest verbundenen Lagerbock 2 mittels an sich bekannter Lagerungsteile in Form einer Achse 3 und einer Lagerbuchse 4 schwenkgelagert ist.

Der Handbremshebel 1 ist einteilig aus Metallguss, vorzugsweise Leichtmetall, oder aus einem geeigneten Kunststoff nach einem an sich bekannten Druckgussverfahren hergestellt.

Der Handbremshebel 1 setzt sich aus einem vorderen Hebelabschnitt in Form eines Griffteils 5, einem mittleren Hebelabschnitt 6 zur Aufnahme einer Arretiereinrichtung und einem hinteren Hebelabschnitt 7 mit einer Zugmittelaufnahme 8 für ein geeignetes Zugmittel 9, welches ein Gestänge und/oder ein Seilzug sein kann, zusammen.

Die Arretiereinrichtung besteht im Wesentlichen aus einem mittels Nieten 10 fest mit dem Lagerbock 2 verbundenen Zahnsegment 11, in welches eine mittels einer Druckstange 12 mit Betätigungsknopf 13 wirkverbindbare und betätigbare und mittels eines Nietes 14 fixierte, schwenkbare Sperrklinke 15 zur Festsetzung des Handbremshebels 1 formschlüssig eingreift.

Wie Figur 1 weiter zu entnehmen ist, ist das Griffteil 5 des Handbremshebels 1 als im Querschnitt im Wesentlichen geschlossenes Hohlprofil mit seitlichen, fensterähnlichen Ausnehmungen bzw. mit gegenüberliegend angeordneten Taschen und Stegen ausgebildet.

Innerhalb des Hohlprofils ist die Druckstange 12 mittels separater Buchsen 16 abgestützt und in axialer Richtung längsverschieblich geführt. Weiterhin ist die Druckstange 12 in an sich bekannter Art und Weise federkraftbeaufschlagt, vorliegend mittels einer Druckfeder 17, die sich mit einem Endabschnitt an einer der Buchsen 16 und mit dem anderen Endabschnitt an der Druckstange 12 bzw. dem Betätigungsknopf 13 abstützt.

Eine derartige Ausgestaltung insbesondere des Griffteils 5 des Handbremshebels 1 geht mit einem erhöhten Montageaufwand einher, welcher insbesondere den zusätzlichen Bauteilen in Form der Buchsen 16 zur Abstützung der Druckfeder 17 im weitestgehend geschlossenen Hohlprofil des Griffteils 5 geschuldet ist.

Weiterhin ist eine das Griffteil 5 umgebende Verkleidung 18 im vorderen Bereich des Handbremshebels 1 vorgesehen, wobei die Verkleidung 18 eine Öffnung 19 zur Aufnahme des Betätigungsknopfs 13 aufweist.

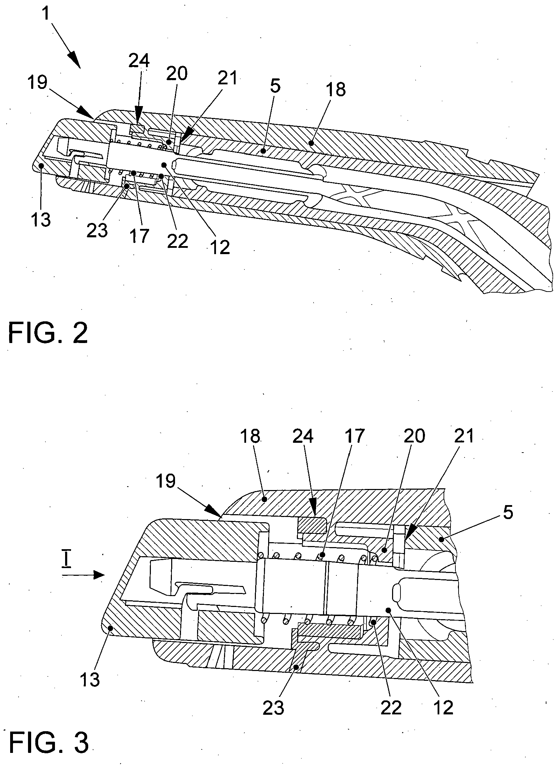

Die Figuren 2 bis 4 zeigen einen erfindungsgemäß ausgebildeten Handbremshebel 1 in unterschiedlichen Ansichten. Die mittels einer Presspassung fest mit dem Griffteil 5 verbundene hülsenförmige Verkleidung 18 weist ein radial ausgerichtetes und sich in Richtung der Druckstange 12 erstreckendes Abstützelement 20 auf. An dem freien Ende der in dem Hohlprofil des Griffteils 5 angeordneten Druckstange 12 ist der Betätigungsknopf 13 lösbar, beispielsweise durch eine Rastverbindung, fixiert. Das Abstützelement 20 ist einstückig mit der Verkleidung 18 ausgebildet und in Längsrichtung zwischen dem Betätigungsknopf 13 und dem Griffteil 5 bzw. einer dem Betätigungskopf 13 zugewandten Stirnfläche 21 des Griffteils 5 angeordnet. Die Druckfeder 17 stützt sich mit einem vorderen Bereich an dem Betätigungsknopf 13 und mit einem dem Betätigungsknopf 13 abgewandten hinteren Endabschnitt 22 an dem Abstützelement 20 ab.

Weiterhin weist der Handbremshebel 1 bzw. die Verkleidung 18 ein Dämpfungselement 23 auf, an welchem sich eine der Druckfeder 17 zugewandte Fläche des Betätigungsknopfs 13 in einer eingerückten Endlage abstützt. Für die Aufnahme des Dämpfungselements 23 ist in der Verkleidung 18 bzw. in dem Abstützelement 20 eine als Mulde ausgebildete Ausnehmung 24 vorgesehen.

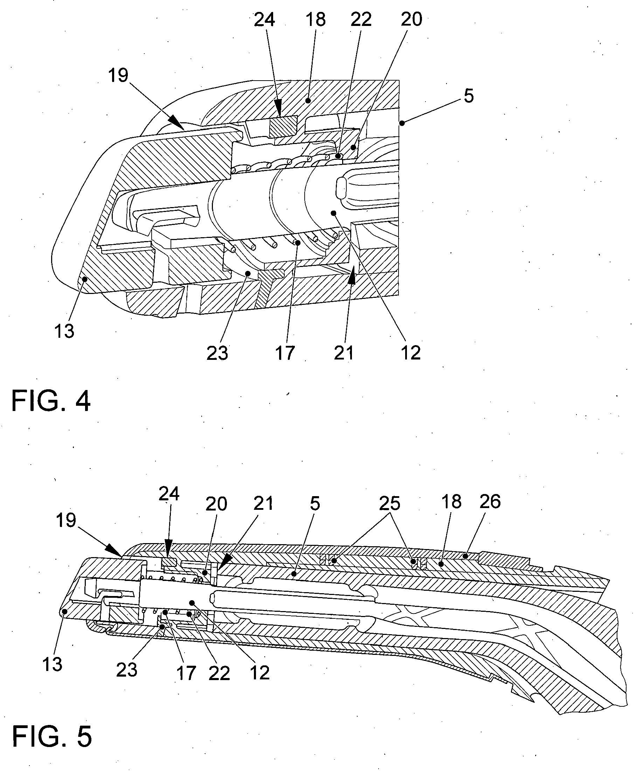

Figur 5 zeigt eine zweite Ausführungsform des erfindungsgemäßen Handbremshebels 1 in einer teilweise geschnittenen Seitenansicht. Auf der Verkleidung 18 ist mittels einer Rastverbindung 25 eine Oberflächenschicht 26, beispielsweise aus Leder, fixiert.

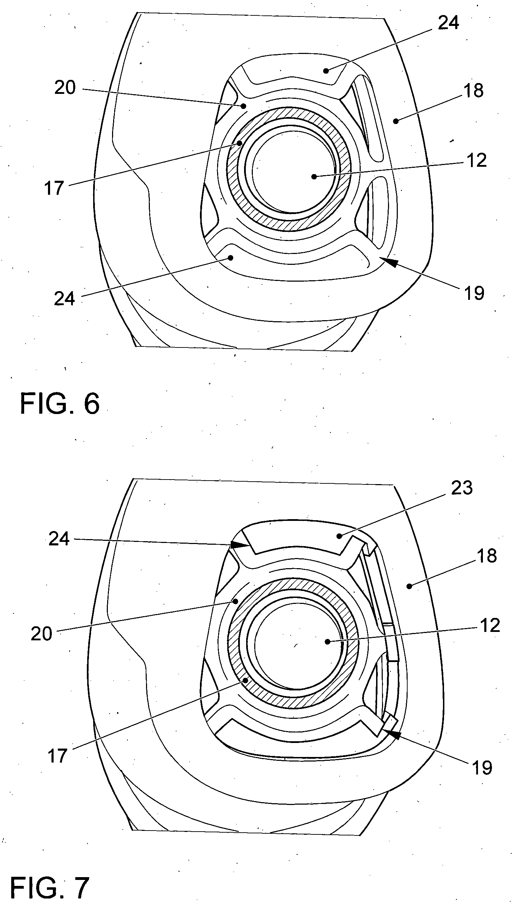

Die Figuren 6 und 7 zeigen eine Ansicht gemäß Pfeil I aus Figur 3 ohne Betätigungsknopf 13 und ohne bzw. mit Dämpfungselement 23. Das Dämpfungselement 23 ist in die Ausnehmung 24 in der Verkleidung 18 bzw. in dem Abstützelement 20 eingepresst.

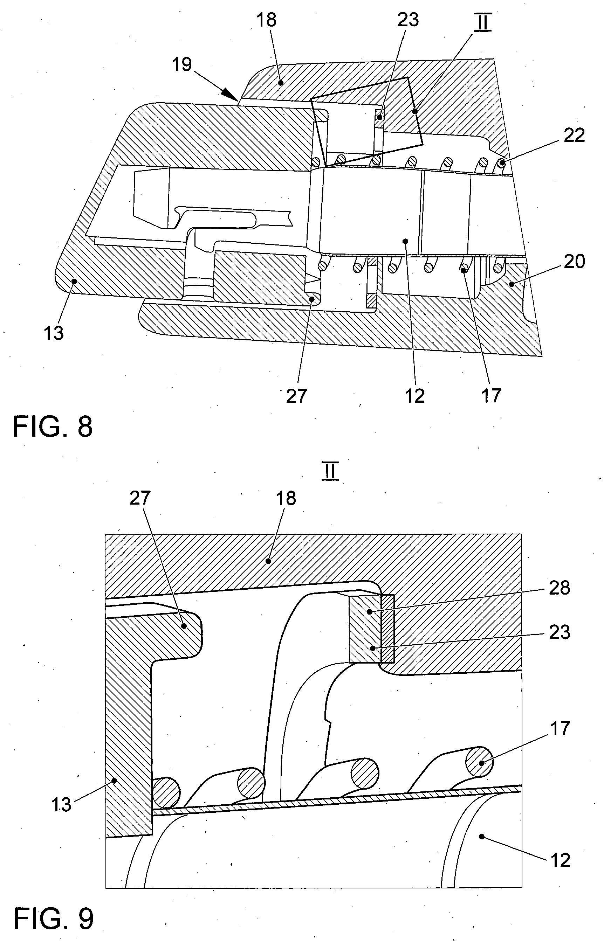

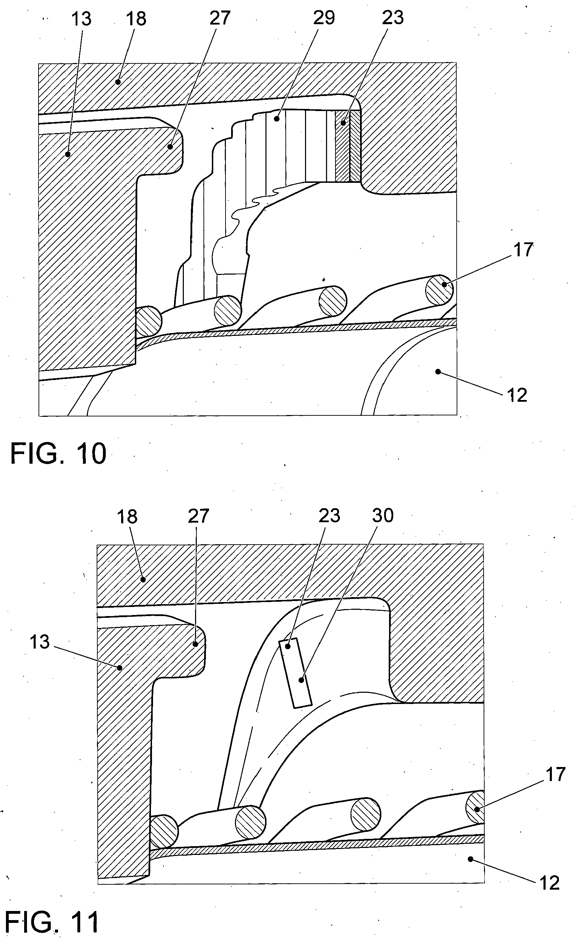

Eine dritte Ausführungsform des erfindungsgemäßen Handbremshebels ist in Figur 8 dargestellt und die Figuren 9 bis 11 zeigen verschiedene Ausführungsvarianten der Einzelheit II aus Figur 8 in einer vergrößerten Darstellung. Das Dämpfungselement 23 ist in allen Ausführungsvarianten an der Verkleidung 18 fixiert, beispielsweise verklebt, und derart angeordnet, dass ein Vorsprung 27 des Betätigungsknopfs 13 das Dämpfungselement 23 in einer eingerückten Endlage kontaktiert. Dabei kann das Dämpfungselement 23 als Schaumstoffring 28 ausgebildet sein (Figur 9) und/oder mehrere über den Umfang verteilt angeordnete Rillen 29 (Figur 10) oder Lamellen 30 (Figur 11) aufweisen.

### Bezugszeichenliste

- 1: Handbremshebel
- 2: Lagerbock
- 3: Achse
- 4: Lagerbuchse
- 5: Griffteil

- 6: mittlerer Hebelabschnitt
- 7: hinterer Hebelabschnitt
- 8: Zugmittelaufnahme
- 9: Zugmittel
- 10: Niet

- 11: Zahnsegment
- 12: Druckstange
- 13: Betätigungsknopf
- 14: Niet
- 15: Sperrklinke

- 16: Buchsen
- 17: Druckfeder
- 18: Verkleidung
- 19: Öffnung
- 20: Abstützelement

- 21: Stirnfläche
- 22: Endabschnitt
- 23: Dämpfungselement
- 24: Ausnehmung
- 25: Rastverbindung

- 26: Oberflächenschicht
- 27: Vorsprung
- 28: Schaumstoffring
- 29: Rille
- 30: Lamelle

## Patentansprüche

1. Handbremshebel (1) für Kraftfahrzeuge mit einem Griffteil (5), einer mit dem Griffteil (5) verbundenen, hülsenförmigen Verkleidung (18) und einer sich in Längsrichtung des Griffteils (5) erstreckenden und gegen die Kraft einer Druckfeder (17) axial verschiebbaren Druckstange (12) mit endseitig angeordnetem Betätigungsknopf (13), wobei die Verkleidung (18) ein radial ausgerichtetes und sich in Richtung der Druckstange (12) erstreckendes Abstützelement (20) aufweist, wobei das Abstützelement (20) in Längsrichtung zwischen dem Betätigungsknopf (13) und dem Griffteil (5) angeordnet ist und dass sich ein dem Betätigungsknopf (13) abgewandter Endabschnitt (22) der Druckfeder (17) an dem Abstützelement (20) abstützt, **dadurch gekennzeichnet, dass** die Verkleidung (18) ein Dämpfungselement (23) aufweist, an welchem sich eine der Druckfeder (17) zugewandte Fläche des Betätigungsknopfs (13) in einer eingerückten Endlage abstützt, wobei das Dämpfungselement (23) mehrere Rillen (29) und/oder Lamellen (30) aufweist.

2. Handbremshebel (1) nach Anspruch 1, **dadurch gekennzeichnet, dass** die Verkleidung (18) und das Abstützelement (20) einstückig ausgebildet sind.

3. Handbremshebel (1) nach den Ansprüchen 1 oder 2, **dadurch gekennzeichnet, dass** sich das Abstützelement (20) über den gesamten Umfang der Verkleidung (18) erstreckt.

4. Handbremshebel (1) nach zumindest einem der vorangehenden Ansprüche, **dadurch gekennzeichnet, dass** die Verkleidung (18) zwei oder mehrere über den Umfang verteilte Abstützelemente (20) aufweist, welche in einer gemeinsamen, quer zur Längsrichtung des Griffteils (5) ausgerichteten Ebene angeordnet sind.

5. Handbremshebel (1) nach zumindest einem der vorangehenden Ansprüche, **dadurch gekennzeichnet, dass** die Verkleidung (18) und das Griffteil (5) unlösbar miteinander verbunden sind.

6. Handbremshebel (1) nach zumindest einem der vorangehenden Ansprüche, **dadurch gekennzeichnet, dass** der Betätigungsknopf (13) lösbar mit der Druckstange (12) verbunden ist.

7. Handbremshebel (1) nach zumindest einem der vorangehenden Ansprüche, **dadurch gekennzeichnet, dass** das Dämpfungselement (23) aus einem elastisch verformbaren Material, insbesondere einem Schaumstoff, besteht und an der Verkleidung (18) oder dem Abstützelement (20) fixiert ist.

8. Handbremshebel (1) nach zumindest einem der vorangehenden Ansprüche, **dadurch gekennzeichnet, dass** das Dämpfungselement (23) und die Verkleidung (18) einstückig ausgebildet sind.

## Claims

1. Handbrake lever (1) for motor vehicles, with a handle part (5), a sleeve-shaped covering (18) connected to the handle part (5), and a push rod (12) which extends in the longitudinal direction of the handle part (5), is axially displaceable counter to the force of a compression spring (17) and has an actuating button (13) arranged on the end side, wherein the covering (18) has a radially oriented supporting element (20) extending in the direction of the push rod (12), wherein the supporting element (20) is arranged in the longitudinal direction between the actuating button (13) and the handle part (5), and that an end portion (22) of the compression spring (17) that faces away from the actuating button (13) is supported on the supporting element (20), **characterized in that** the covering (18) has a damping element (23) on which a surface of the actuating button (13) facing the compression spring (17) is supported in an engaged end position, wherein the damping element (23) has a plurality of grooves (29) and/or slats (30).

2. Handbrake lever (1) according to Claim 1, **characterized in that** the covering (18) and the supporting element (20) are formed integrally.

3. Handbrake lever (1) according to Claim 1 or 2, **characterized in that** the supporting element (20) extends over the entire circumference of the covering (18).

4. Handbrake lever (1) according to at least one of the preceding claims, **characterized in that** the covering (18) has two or more supporting elements (20) which are distributed over the circumference and are arranged in a common plane oriented transversely with respect to the longitudinal direction of the handle part (5).

5. Handbrake lever (1) according to at least one of the preceding claims, **characterized in that** the cover (18) and the handle part (5) are connected nonreleasably to each other.

6. Handbrake lever (1) according to at least one of the preceding claims, **characterized in that** the actuating button (13) is connected releasably to the push rod (12).

7. Handbrake lever (1) according to at least one of the preceding claims, **characterized in that** the damping element (23) is composed of an elastically deformable material, in particular a foam, and is fixed on the covering (18) or the supporting element (20).

8. Handbrake lever (1) according to at least one of the preceding claims, **characterized in that** the damping element (23) and the covering (18) are formed integrally.

## Revendications

1. Levier de frein à main (1) pour véhicules automobiles, comprenant une partie de préhension (5), un habillage (18) en forme de douille connecté à la partie de préhension (5) et une tige de pression (12) s'étendant dans la direction longitudinale de la partie de préhension (5) et déplaçable axialement à l'encontre de la force d'un ressort de compression (17), avec un bouton d'actionnement (13) disposé du côté de l'extrémité, l'habillage (18) présentant un élément de support (20) orienté radialement et s'étendant dans la direction de la tige de pression (12), l'élément de support (20) étant disposé dans la direction longitudinale entre le bouton d'actionnement (13) et la partie de préhension (5), et que une portion d'extrémité (22) du ressort de compression (17) opposée au bouton d'actionnement (13) s'appuyant contre l'élément de support (20), **caractérisé en ce que** l'habillage (18) présente un élément d'amortissement (23) au niveau duquel s'appuie une surface du bouton d'actionnement (13) tournée vers le ressort de compression (17), dans une position d'extrémité rentrée, l'élément d'amortissement (23) présentant plusieurs rainures (29) et/ou lamelles (30).

2. Levier de frein à main (1) selon la revendication 1, **caractérisé en ce que** l'habillage (18) et l'élément de support (20) sont réalisés d'une seule pièce.

3. Levier de frein à main (1) selon les revendications 1 ou 2, **caractérisé en ce que** l'élément de support (20) s'étend sur toute la périphérie de l'habillage (18).

4. Levier de frein à main (1) selon au moins l'une quelconque des revendications précédentes, **caractérisé en ce que** l'habillage (18) présente deux ou plus de deux éléments de support (20) répartis sur la périphérie, lesquels sont disposés dans un plan commun orienté transversalement à la direction longitudinale de la partie de préhension (5) .

5. Levier de frein à main (1) selon au moins l'une quelconque des revendications précédentes, **caractérisé en ce que** l'habillage (18) et la partie de préhension (5) sont connectés de manière inamovible l'un à l'autre.

6. Levier de frein à main (1) selon au moins l'une quelconque des revendications précédentes, **caractérisé en ce que** le bouton d'actionnement (13) est connecté de manière amovible à la tige de pression (12).

7. Levier de frein à main (1) selon au moins l'une quelconque des revendications précédentes, **caractérisé en ce que** l'élément d'amortissement (23) se compose d'un matériau déformable élastiquement, en particulier d'une mousse, et est fixé à l'habillage (18) ou à l'élément de support (20) .

8. Levier de frein à main (1) selon au moins l'une quelconque des revendications précédentes, **caractérisé en ce que** l'élément d'amortissement (23) et l'habillage (18) sont réalisés d'une seule pièce.
